# EUROPEAN PATENT SPECIFICATION

(11) **EP 1 585 865 B1**
(45) Date of publication and mention of the grant of the patent: **14.11.2018**
(21) Application number: 03773005.8
(22) Date of filing: 14.11.2003
(51) Int. Cl.: E02F 3/36, E02F 3/627, A01B 63/102

(54) **A LOADER FOR AGRICULTURAL TRACTORS**
LADER FÜR LANDWIRTSCHAFTLICHE TRAKTOREN
CHARGEUR POUR TRACTEURS AGRICOLES

(30) Priority: 30.12.2002 SE 0203894
(43) Date of publication of application: 19.10.2005
(73) Proprietor: Schager, Staffan, 114 32 Stockholm (SE)
(72) Inventor: Schager, Staffan, 114 32 Stockholm (SE)
(74) Representative: Örtenblad, Bertil Tore
(86) International application number: PCT/SE2003/001772
(87) International publication number: WO 2004/059092

(56) References cited:
- DE-B- 1 010 911
- GB-A- 770 217
- JP-A- 55 141 101
- JP-U- 62 178 811
- US-A- 2 812 083
- US-A- 3 198 357
- US-A- 3 260 386
- US-A- 3 957 167
- US-A- 4 725 189

## Description

The present invention relates to a loader for agricultural tractors.

One problem experienced on smaller farms resides in the need of a so-called front loader, i.e. a tractor-like vehicle that includes two externally mounted hydraulically manoeuvrable lifting arms for supporting a bucket or lifting forks or some other implement or appliance at their free ends.

The problem arises because the purchasing cost of such front loaders is too high in relation to the use of the vehicle, meaning that small farms are often forced to manage without the use of a front loader.

Agricultural tractors do not come equipped with externally mounted lifting arms and it is expensive to modify such a tractor by fitting it with such arms.

This problem is solved by the present invention, which provides a solution which enables a conventional tractor to be readily and cheaply fitted with a working implement or appliance so that the tractor can fulfil the function of a front loader.

GB 770,217 discloses a complicated lifting arrangement where a link system constitutes a parallel motion linkage.

JP 62 - 178811 also shows a complicated linkage arrangement where a tool is pivotally fixed to lifting arms of a tractor.

JP 55 - 141101 also shows an arrangement where a tool is pivotally fixed to the lifting arms of a tractor.

DE 1 010 911 shows a tractor where a tool is fixed pivotally at the end of the lifting arms of a tractor.
US 2,812,083 shows a tractor where the tool is fixed via arms to the lifting arms of a tractor. Lifting of the arms is accomplished by a special arrangement.
The present invention thus relates to a loader for agricultural tractors as defined in claim 1.

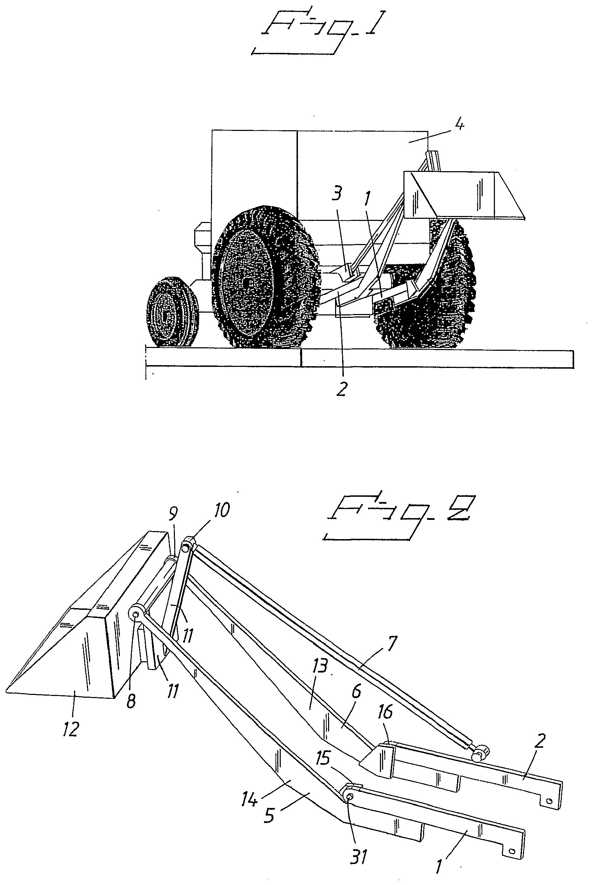

Preferred embodiments are defined by the dependent claims The invention will now be described in more detail partially with reference to an exemplifying embodiment thereof illustrated in the accompanying drawings, in which
Figure 1 is a view of a tractor seen obliquely from the rear and including features according to the present invention;
Figure 2 is a perspective view of an inventive arrangement;
Figures 3 and 4 are respective views of the Figure 2 arrangement in different positions;
Figure 5 illustrates different lifting heights; and
Figure 6 illustrates different attachment points.

Both small and larger conventional tractors are equipped with standardised hydraulically manoeuvrable and parallel lifting arms attached to the rear part of the tractor. The arms are intended to support different working implements, such as ploughs, harrows, etc., and are able to raise and lower the same as required.

The invention relates to a loader for tractors equipped with such standardised hydraulically manoeuvrable parallel lifting arms 1, 2 pivotally attached in the rear part of the tractor and provided with a centre attachment 3 in the tractor 4 between said lifting arms 1, 2.

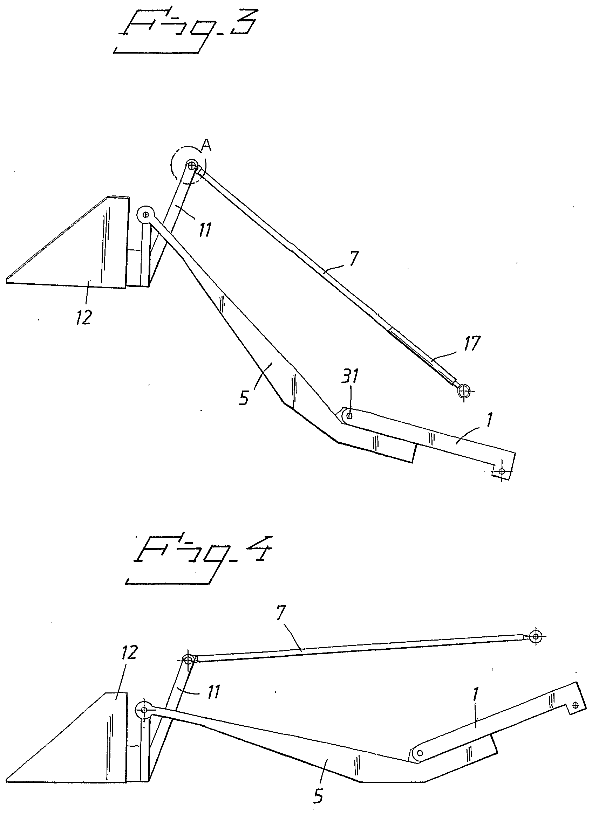

As will be apparent from Fig. 3, the inventive loader includes two parallel arms 5, 6 which are intended to be fastened in respective lifting arms 1, 2 so as to extend rearwardly out from the tractor generally in the longitudinaldirection of the of the lifting arms 1, 2.

A centre rod 7 which can be extended hydraulically during operation extends outwards from the centre attachment 3 parallel with the lifting arms 1, 2 and with the arms 5, 6.

Respective arms 5, 6 and the outer end of the centre rod 7 are intended for connection to a working implement.

According to one preferred embodiment, respective arms 5, 6 and the outer end 8, 9, 10 of the centre rod 7 are intended for connection to an attachment 11 to which a working implement 12 shall be attached. The ends 8, 9, 10 are pivotally attached in the attachment whereas the implement is fixedly connected thereto.

Alternatively, respective arms 5, 6 and the outer end 8, 9; 10 of the centre rod 7 can be adapted for direct connection to a working implement.

The loader is made of a suitable steel material.

Although the working implement 12 is shown in the drawings in the form of a bucket or scoop, it will be understood that it may consist of any implement or appliance whatsoever, such as lifting forks, a lifting bar or rod for lifting cement pipes, a platform or snow plough. The present invention is therefore not restricted to any given form of implement. Neither is the invention restricted to any particular attachment design, since the person skilled in the art will be able to adapt the attachment means to the implement concerned.

The arms 5, 6 and the implement 12 are lifted in response to lifting of the lifting arms 1, 2. The implement can be tilted, i.e. swung about a horizontal axis, by changing the length of the centre rod.

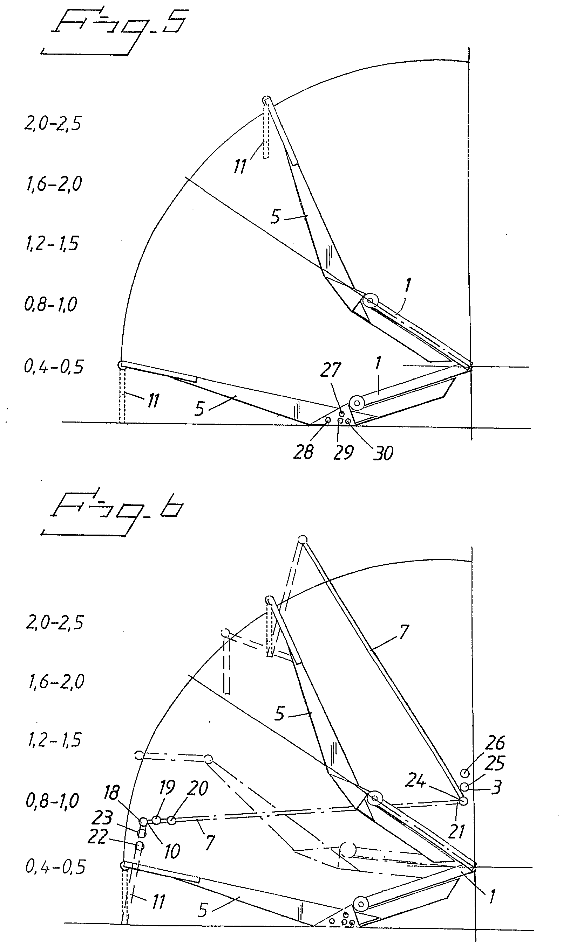

The swing range of the standardised lifting arms is such that the arms will not define a sufficiently small angle with the vertical plane when raised to a maximum; see Fig. 5 which shows the lifting arm when swung up to its end position.

The arms 5, 6 are therefore bent upwards in a region 13, 14 outwardly of and close to the free ends 15, 16 of the lifting arms 1, 2. This achieves a high implement lifting height while allowing the implement to be lowered down onto the ground.

Figure 5 illustrates swinging of the loader in a vertical plane. In this case, the arms 5, 6 are designed for a lifting height of roughly 2.5 metres, which is sufficient for the majority of tasks on a typical farm. The lifting height can be increased by making the arms 5, 6 longer. However, longer arms will reduce the maximum load bearing capacity.

According to one preferred embodiment, the bending angle of the arms 5, 6 is adjustable, therewith enabling the maximum lifting height of the arms to be varied. In one simple embodiment, respective arms 5, 6 are divided and hinged about a joint 27, said arm parts being provided with holes 28 - 30, as shown in Fig. 5, for co-action with a pin (not shown) so as to hold the arms at the chosen bending angle.

According to one preferred embodiment there is provided at the outer end 8, 9 of respective arms a joint that functions to pivotally support an implement attachment means or an implement. A joint for pivotal connection to an implement 12 is provided at the free end 10 of the centre rod 7.

In a preferred embodiment the centre rod 7 includes along its length an hydraulic piston-cylinder device which is used to change the length of the centre rod, said device being driven by the tractor's hydraulic system.

Preferably, the free end 10 of the centre rod 7 will include a number of attachment points 18 - 20 for co-action with the attachment (11) or an implement (12) at mutually different distances from the opposite end 21 of said rod. The attachment 11 may also be provided with different attachment points 22, 23, for attachment of the free end of the centre rod 7.

The centre attachment 3 is also preferably provided with a number attachment points 24 - 26 for co-action with the inner end of the centre rod 7.

The various attachment points 18 - 20, 22, 23, 24 .- 26 enable the attachment means to be adapted to suit different implements according to their geometrical designs.

According to one highly preferred embodiment, respective arms 5, 6 are secured at their inner parts to the standard attachment means of respective lifting arms 1, 2 by means of cotter pins, split pins or the like 31. It is also preferred that respective arms 5, 6 project to some extent in beneath respective lifting arms 1, 2 and abut against the underside of said lifting arms, as shown in Fig. 3. This means that said pins 31 of this embodiment are the sole means required to effect attachment of the arms to the lifting arms, therewith enabling the inventive loader to be secured in a very simple manner.

It will be obvious that the present invention provides an easy and inexpensive solution to the problem mentioned in the introduction.

Although the invention has been described above with reference to a number of embodiments thereof, it will be obvious to the person skilled in the art that the structural design of the loader can be varied.

The invention shall not therefore be considered to be limited to the above described and illustrated embodiments, since modifications can be made within the scope of the following claims.

## Claims

1. A loader for agricultural tractors equipped with standard hydraulically manoeuvrable, parallel lifting arms (1, 2) which are pivotally mountable in the rear part of the tractor and provided with a centre attachment (3) in the tractor between the lifting arms, wherein the loader includes two parallel arms (5, 6) when mounted on the tractor and viewed from above for attachment to respective lifting arms (1, 2) such as to extend rearwardly of the tractor and generally in the longitudinal direction axis of the lifting arms (1, 2); wherein a centre rod (7) that can be extended hydraulically during operation, extends outwardly from said centre attachment (3) parallel with the lifting arms (1, 2) when mounted on the tractor and viewed from above; wherein the respective parallel arms (5, 6) and the outer end of the centre rod (7) are adapted for connection to a working implement or appliance (12); and wherein the respective parallel arms (5, 6) and the outer end (8,9;10) of the centre rod (7) are provided with attachment means (11) for attachment to a working implement (12) **characterised in that** the parallel arms (5, 6) are bent upwards when mounted on the tractor, in a region (13, 14) outwardly of and close to the free end of the respective lifting arms (1, 2).

2. A loader according to Claim 1, **characterised in that** the bending angle of the arms (5, 6) can be adjusted.

3. A loader according to Claim 1 or 2, **characterised in that** included at the outer end (8, 9) of respective arms (5, 6) is a joint which is adapted to pivotally support an implement (12) or an implement attachment (11); and **in that** included at the free end (10) of the centre rod (7) is a joint which is adapted for pivotal connection to a working implement (12).

4. A loader according to Claim 1, 2 or 3, **characterised in that** the centre rod (7) includes along its length an hydraulic piston-cylinder device (17) which functions to change the length of the centre rod.

5. A loader according to Claim 1, 2, 3 or 4, **characterised in that** the centre rod is provided with attachment points (18 - 20, 22, 23) at the free end of the centre rod (7) at mutually different distances from the opposite end of said centre rod for co-action with an attachment means (11) or a working implement (12).

6. A loader according to Claim 1, 2, 3, 4 or 5, **characterised in that** respective arms (5, 6) are adapted to be secured at their inner parts to the standard attachment means of respective lifting arms (1, 2) provided to this end by means of cotter pins, split pins or the like (31); and **in that** respective arms (5, 6) project to some extent in beneath respective lifting arms (1, 2) when mounted on a tractor for abutment with the underside of respective lifting arms.

## Patentansprüche

1. Lader für einen landwirtschaftlichen Traktor, ausgestattet mit normalen hydraulischen bewegbaren parallelen Hebearmen (1, 2), welche drehbar am hinteren Teil des Traktors montierbar sind, und
mit einer Zentralanordnung (3) am Traktor zwischen den Hebearmen, wobei der Lader, wenn am Traktor montiert und von oben betrachtet, zwei parallele Arme (5, 6) zum Festlegen an den entsprechenden Hebearmen (1,2) umfasst, die sich nach hinten gewandt vom Traktor und generell in die Längsachsrichtung der Hebearme erstrecken;
wobei eine Zentralstange (7), welche während des Betriebs hydraulisch ausfahrbar ist, sich, wenn am Traktor festgelegt und von oben betrachtet, nach außen von der Zentralanordnung (3) parallel zu den Hebearmen (1, 2) erstreckt;
wobei die entsprechenden parallelen Arme (5, 6) und das äußere Ende der Zentralstange (7) dazu ausgelegt sind, mit einem Arbeitsgerät oder einer Vorrichtung (12) verbunden zu sein;
und wobei die entsprechenden parallelen Arme (5, 6) und das äußere Ende (8, 9; 10) der Zentralstange (7) mit Anschlusselementen (11) zur Anbindung eines Arbeitsgeräts (12) ausgestattet sind,
**dadurch gekennzeichnet, dass** die parallelen Arme (5, 6), wenn diese am Traktor montiert sind, in einem Bereich (13, 14) außerhalb und in der Nähe eines freien Endes der entsprechenden Hebearme (1, 2) nach oben gebogen sind.

2. Lader gemäß Anspruch 1, **dadurch gekennzeichnet, dass** der Biegewinkel der Arme (5, 6) anpassbar ist.

3. Lader gemäß Anspruch 1 oder 2, **dadurch gekennzeichnet, dass** das äußere Ende (8, 9) der entsprechenden Arme (5, 6) eine Verbindungsstelle umfasst, welche dazu ausgelegt ist, rotierbar ein Arbeitsgerät (12) oder eine Arbeitsgeräthalterung (11) zu halten;
und dass das freie Ende (10) der Zentralstange (10) eine Verbindungsstelle umfasst,
welche dazu ausgelegt ist, rotierbar mit einem Arbeitsgerät (12) verbunden zu sein.

4. Lader gemäß Anspruch 1, 2 oder 3, **dadurch gekennzeichnet, dass** die Zentralstange (7) entlang ihrer Länge eine Hydraulikzylindervorrichtung (17) umfasst, welche dazu dient, die Länge der Zentralstange zu verändern.

5. Lader gemäß Anspruch 1, 2, 3 oder 4, **dadurch gekennzeichnet, dass** die Zentralstange mit Anordnungspunkten (18 - 20, 22, 23) am freien Ende der Zentralstange ausgestattet ist, welche unterschiedliche Abstände zu dem gegenüberliegenden Ende dieser Zentralstange aufweisen, um mit einer Arbeitsgeräthalterung (11) oder mit Arbeitsgerät (12) zusammenzuwirken.

6. Lader gemäß Anspruch 1, 2, 3, 4, oder 5, **dadurch gekennzeichnet, dass** die entsprechenden Arme (5, 6) dazu ausgelegt sind, mit ihrem inneren Teil an die normalen Anordnungsmittel von entsprechenden Hebearmen (1, 2) mittels Keilen, Splinten oder ähnlichem befestigt zu sein;
und dass die entsprechenden Arme (5, 6), wenn diese am Traktor montiert sind, sich zumindest in einem gewissen Maß unterhalb der entsprechenden Hebearme (1, 2) erstrecken, zur Kontaktierung mit der Unterseite der entsprechenden Hebearme.

## Revendications

1. Chargeur pour tracteurs agricoles, équipé de bras de levage parallèles hydrauliques standard (1, 2) qui peuvent être montés pivotants sur la partie arrière du tracteur et pourvu d'une fixation centrale (3) sur le tracteur, entre les bras de levage, dans lequel :
le chargeur comporte, lorsqu'il est monté sur le tracteur et vu du dessus, deux bras parallèles (5, 6) destinés à être fixés aux bras de levage respectifs (1, 2), de manière à s'étendre vers l'arrière du tracteur et sensiblement dans le sens longitudinal des bras de levage (1, 2) ;
dans lequel une tige centrale (7) qui est extensible hydrauliquement en cours de fonctionnement s'étend vers l'extérieur depuis ladite fixation centrale (3), parallèlement aux bras de levage (1, 2), lorsqu'elle montée sur le tracteur et vue du dessus ;
dans lequel les bras parallèles respectifs (5, 6) et l'extrémité extérieure de la tige centrale (7) sont conçus pour un raccordement à un outil ou appareil de travail (12) ;
et dans lequel les bras parallèles respectifs (5, 6) et l'extrémité extérieure (8, 9 ; 10) de la tige centrale (7) sont pourvus de moyens de fixation (11) pour une fixation à un outil de travail (12), **caractérisé en ce que** les bras parallèles (5, 6) sont fléchis vers le haut lorsqu'ils sont montés sur le tracteur, dans une région (13, 14) vers l'extérieur et proche de l'extrémité libre des bras de levage respectifs (1, 2).

2. Chargeur selon la revendication 1, **caractérisé en ce que** l'angle de flexion des bras (5, 6) peut être réglé.

3. Chargeur selon la revendication 1 ou 2, **caractérisé en ce qu'**est comprise à l'extrémité extérieure (8, 9) des bras respectifs (5, 6) une articulation qui est conçue pour supporter un outil (12) ou une fixation d'outil (11) de manière à ce qu'il ou elle puisse pivoter ;
et **en ce qu'**à l'extrémité libre (10) de la tige centrale (7) se trouve une articulation qui est conçue pour un raccordement pivotant à un outil de travail (12).

4. Chargeur selon la revendication 1, 2 ou 3, **caractérisé en ce que** la tige centrale (7) comporte sur sa longueur un dispositif formant piston-cylindre hydraulique (17) qui sert à modifier la longueur de la tige centrale.

5. Chargeur selon la revendication 1, 2, 3 ou 4, **caractérisé en ce que** la tige centrale est pourvue de points de fixation (18 à 20, 22, 23) à l'extrémité libre de la tige centrale (7) à des distances différentes les unes des autres par rapport à l'extrémité opposée de ladite tige centrale, pour une action conjointe avec un moyen de fixation (11) ou un outil de travail (12).

6. Chargeur selon la revendication 1, 2, 3, 4 ou 5, **caractérisé en ce que** les bras respectifs (5, 6) sont conçus pour être fixés par leurs parties intérieures aux moyens de fixation standard des bras de levage respectifs (1, 2) prévus à cet effet, au moyen de goupilles fendues, de clavettes ou analogues (31) ; et **en ce que** les bras respectifs (5, 6) font saillie dans une certaine mesure en dessous des bras de levage respectifs (1, 2), lorsqu'ils sont montés sur un tracteur pour venir en butée contre la face inférieure de bras de levage respectifs.
